# EUROPÄISCHE PATENTSCHRIFT

(11) **EP 1 036 352 B1**
(45) Veröffentlichungstag und Bekanntmachung des Hinweises auf die Patenterteilung: **05.02.2003**
(21) Anmeldenummer: 98963520.6
(22) Anmeldetag: 27.11.1998
(51) Int. Cl.: G05B 19/418

(54) **VERFAHREN ZUR BILDSCHIRMGESTÜTZTEN DEFINITION UND PARAMETRIERUNG VON SCHNITTSTELLEN**
METHOD FOR SCREEN-SUPPORTED DEFINITION AND PARAMETERING OF INTERFACES
PROCEDE DE DEFINITION ET DE PARAMETRAGE D'INTERFACES ASSISTE PAR ECRAN

(30) Priorität: 01.12.1997 EP 97120988
(43) Veröffentlichungstag der Anmeldung: 20.09.2000
(73) Patentinhaber: SIEMENS AKTIENGESELLSCHAFT, 80333 München (DE)
(72) Erfinder: GIKAS, Diamantis, D-90473 Nürnberg (DE); KLOSE, Ralf, D-90610 Winkelhaid (DE); JACHMANN, Thomas, D-90475 Nürnberg (DE); HEINDL, Elisabeth, D-90513 Zirndorf (DE)
(86) Internationale Anmeldenummer: EP9807660
(87) Internationale Veröffentlichungsnummer: WO99028799

(56) Entgegenhaltungen:
- EP-A- 0 477 760
- EP-A- 0 482 523
- EP-A- 0 592 921
- EP-A- 0 623 871
- US-A- 5 065 347
- US-A- 5 168 441
- US-A- 5 689 662
- CAROLINE HALLIDAY, DAVID GOBEL, MARK MINASI: "Using OS/2" 1989 , QUE CORPORATION , ISBN 0-8022-375-8, UNITED STATES OF AMERICA XP002100979 siehe Seite 435 - Seite 458; Abbildungen 18.1-18.21
- U. Ottenburger "Verbesserte Mensch-Maschine-Schnittstelle für die Prozessführung in der Kraftwerkswarte", Energie & Automation, Leittechnik im Kraftwerk, Ausgabe November 1990, Seiten 9-12

## Beschreibung

Die vorliegende Erfindung betrifft ein Verfahren zur bildschirmgestützten Definition und Parametrierung von Schnittstellen der Softwarekomponenten eines industriellen Automatisierungssystems.

Im Zuge der zunehmenden Modularisierung von Softwarekomponenten hat sich die Organisation zusammengehöriger Daten und Operationen in dafür von den jeweiligen Programmiersprachen vorgesehenen Strukturen durchgesetzt. Für die sogenannten "höheren" Programmiersprachen sind dies auf einer unteren Ebene die sogenannten Prozeduren oder Funktionen, wobei jeweils zusammengehörige Prozeduren oder Funktionen z.B. in einem Modul zusammengefaßt werden und zusammengehörige Module ggf in einer sogenannten Kollektion und die Module bzw. die ggf. vorhandenen Kollektionen schließlich zu der lauffähigen Applikation zusammengefaßt werden.

Der Datenaustausch zwischen den beschriebenen Strukturen erfolgt über vordefinierte bzw. vordefinierbare Schnittstellen. Exemplarisch sei eine Funktion betrachtet, die zu einem vorgegebenen Datum den zugehörigen Wochentag ermittelt. Dieser Funktion ist als Parameter das fragliche Datum zu übergeben, während die Funktion den diesem Datum zugehörigen Wochentag als Ergebnis zurückgibt. Die definierbare bzw. vordefinierte Schnittstelle stellt dabei einerseits den Speicherplatz zur Verfügung, über den der Austausch dieser Daten erfolgen kann, und stellt andererseits die Konsistenz der Daten sicher, indem z.B. eine Typprüfung durchgeführt wird, die im vorliegend betrachteten Fall beispielsweise sicherstellt, daß die Funktion nicht den vermeintlichen Wochentag zu einem als Parameter übergebenen Textstring ermittelt.

Im vorliegenden Fall ist also ein Speicherplatz, der zur Auf-nahme einer das Datum repräsentierenden Darstellung geeignet ist, sowie ein weiterer Speicherplatz, der zur Aufnahme einer des als Ergebnis zurückgegebenen Wochentags dienenden Darstellung geeignet ist, erforderlich.

Eine grundsätzlich vergleichbare Konstellation findet man auch bei Automatisierungsvorhaben, wobei die jeweiligen Softwarekomponenten z.B. entsprechend der zu steuernden und/oder zu überwachenden Prozeßperipherie organisiert sind. Die Strukturen, die bei einer für Automatisierungsvorhaben gebräuchlichen Programmiersprache, z.B. Step® 5 bzw. Step® 7 (eingetragene Marke der SIEMENS AG), Verwendung finden, heißen Funktionsbausteine oder Operationsbausteine. Auch diese Bausteine weisen Schnittstellen auf, über die sie parametrierbar sind, über die bestimmte Aktionen veranlaßbar sind, über die bestimmte interne Daten des Bausteins oder prozeßbezogene Daten abfragbar sind, etc.

Aus US-A-5 689 662 sind Möglichkeiten zur Erweiterung von Komponenten graphischer Benutzeroberflächen bekannt. Im Wesentlichen wird dabei die Funktionalität der allgemein bekannten Windows Betriebssysteme bzw. Bildschirmoberflächen beschrieben.

Aus Caroline Halliday, David Gobel, Mark Minasi: "Using OS/2", 1989, QUE CORPORATION, ISBN 0-8022-375-8, United States of America XP002100979 sind ebenfalls Möglichkeiten zur Erweiterung von Komponenten graphischer Benutzeroberflächen beschrieben, wobei es sich hierbei um das mit dem zum oben genannten Betriebssystem im Wettbewerb stehenden Betriebssystem OS/2 handelt.

Aus EP-A-0 477 760 ist ein Programmierverfahren bekannt, das auf das Verknüpfen von Graphiksymbolen am Bildschirm, die jeweils nicht teilbaren Einzelfunktionen des, dieses softwareausführenden Rechners entsprechen, beschränkt ist.
Aus EP-A-0 592 921 ist eine Prozeßsteuerung mit einer graphischen Attributschnittstelle bekannt, bei der Anzeigefenster in mehrere Teilfenster untergliedert sein kann.

Aus Energie & Automation, Leittechnik im Kraftwerk, Ausgabe November 1990, Seiten 9 bis 12 ist eine Mensch-Maschine-Schnittstelle für die Prozeßführung in der Kraftwerkswarte bekannt, bei der die für die Prozeßbedienung notwendigen Bedienelemente des konventionellen Leitstands als Piktogramme auf dem Bildschirm abgebildet werden und zu jeder Zeit den aktuellen Zustand der entsprechenden Aggregate anzeigen.

Die vorliegende Erfindung stellt sich zur Aufgabe, ein Verfahren zur bildschirmgestützten Definition und Parametrierung von Schnittstellen der Softwarekomponenten eines Automatisierungssystems anzugeben, das besonders benutzerfreundlich ist.

Die Aufgabe wird durch ein Verfahren mit den in den Ansprüchen 1 bis 4 angegebenen Merkmalen gelöst.

Wenn die Attribute des selektierten Schnittstellenparameters bzw. der selektierten Schnittstellenparameter darstellbar und editierbar sind, ist eine jederzeitige benutzerfreundliche Darstellung der Parameter abrufbar bzw. sind die Attribute der Schnittstellenparameter jederzeit unmittelbar am Bildschirm editierbar.

Wenn die Attribute einen Namensteil und einen Datenteil aufweisen, wobei der Namensteil zur Identifizierung des Attributes dient und der Datenteil, sofern seine bildliche Darstellung mehr Platz erfordert, als das Anzeigefenster bzw. das Anzeigegerät bietet, horizontal scrollbar ist, ist die Zuordnung von Daten zu Namenteil jederzeit am Bildschirm ersichtlich, sofern die bildliche Darstellung des Namensteils ortsfest ist.

Wenn der Namensteil und der Datenteil in nebeneinander bzw. untereinander angeordneten vertikalen Spalten bzw. horizontalen Zeilen angeordnet ist, wobei der Datenteil ggf. in eigene Spalten bzw. Zeilen unterteilt ist, ist eine besonders übersichtliche Darstellung von Namens- und Datenteil gewährleistet.

Wenn die Abfolge der Spalten bzw. der Zeilen des Datenteils vom Benutzer frei wählbar und insbesondere auch abspeicherbar ist, kann der Benutzer z.B. die für ihn interessantesten Spalten so anordnen, daß sie jederzeit, d.h. beispielsweise ohne den Bildschirminhalt scrollen müssen, am Bildschirm ersichtlich sind. Wenn die gewählte Abfolge darüber hinaus noch abspeicherbar ist, findet der Benutzer sobald er ein einmal seinen Wünschen entsprechend organisiertes Attribut eines Schnittstellenparameters erneut auf den Bildschirm ruft, die zuvor gewählte und abgespeicherte Abfolge wieder vor. Dieses Verfahren ist für jeden Container separat anwendbar. D.h. die Anzahl sowie die Anordnung der Spalten kann für jeden Container einzeln eingestellt werden.

Weitere Merkmale, Vorteile und Anwendungsmöglichkeiten der vorliegenden Erfindung ergeben sich aus den Unteransprüchen der nachfolgenden Beschreibung eines Ausführungsbeispiels anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung.

Dabei zeigen:

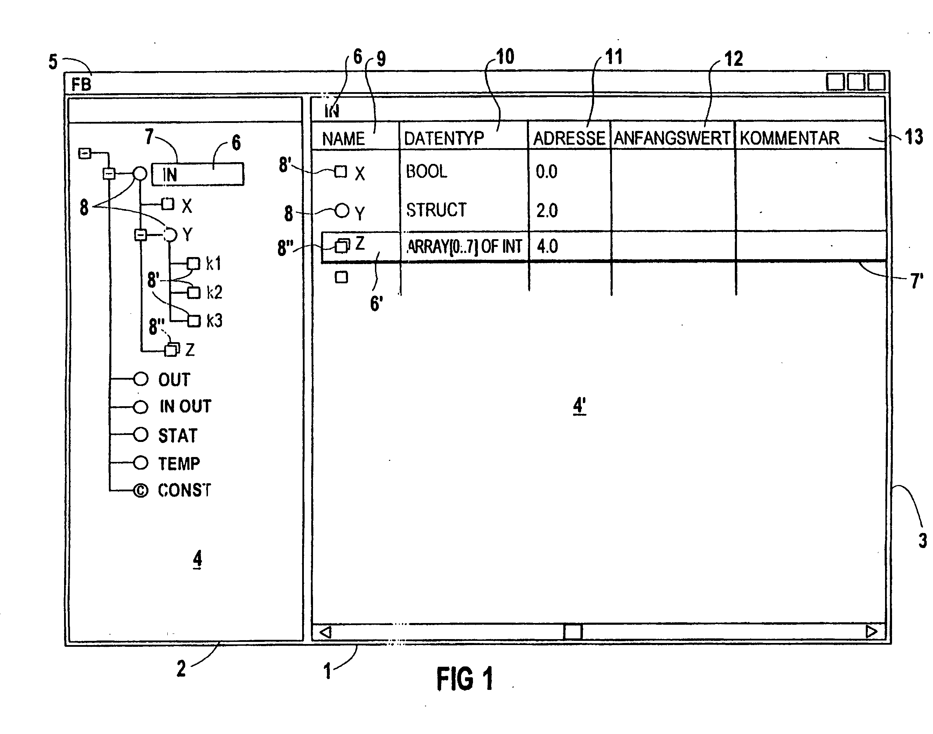

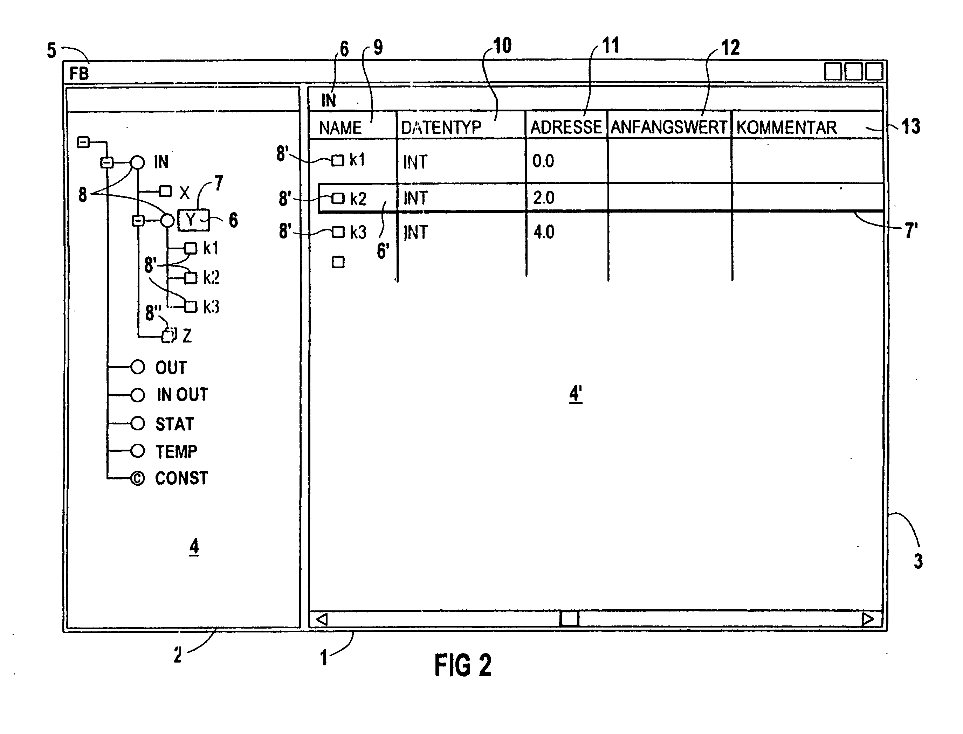

- FIG 1 und FIG 2: eine Bildschirmdarstellung bei der Anwendung des Verfahrens zum Parametrieren einer Softwareschnittstelle

In FIG. 1 ist die Bildschirmdarstellung des vertikal geteilten Anzeigefensters 1, welches das erste Teilfenster 2 und das zweite Teilfenster 3 umfaßt, gezeigt.

Im linken Teil des Anzeigefensters 1 ist das erste Anzeigefenster 2 gezeigt, in dem die hierarchische Struktur der Softwareschnittstelle 4 der jeweiligen Softwarekomponente 5 - eines Funktionsbausteins FB 5 - des Automatisierungssystems dargestellt ist. Die Parameter der Softwareschnittstelle sind mittels eines beweglichen Cursors 7, z.B. mittels eines durch ein bewegliches Eingabegerät wie z.B. eine sog. Maus, beeinflußten Cursors selektierbar.

Zu einem selektierten Schnittstellenparameter 6 erfolgt im rechten Teil des Anzeigefensters 1, also im zweiten Teilfenster 3, eine Detaildarstellung 4', wobei die Detaildarstellung 4' eine auf die Art des selektierten Schnittstellenparameters 6 abgestimmte Anzeige ergibt, die weiter unten beschrieben wird. Die textuelle Bezeichnung der hierarchischen Position des selektierten Schnittstellenparameters 6 wird in der Titelzeile des zweiten Teilfensters 3 angezeigt, um jederzeit den Zusammenhang der beiden Darstellungen 4, 4' der Softwareschnittstelle bzw. des selektierten Ausschnitts kenntlich zu machen.

Das erfindungsgemäße bildschirmgestützte Parametrieren bezieht sich immer auf genau eine Softwarekomponente des Automatisierungssystems. Diese Softwarekomponente ist z.B. die gerade bearbeitete Softwarekomponente, wobei das erfindungsgemäße Verfahren z.B. durch einen speziellen Dialog beim Bearbeiten der Softwarekomponente einleitbar ist. Die Auswahl einer zu parametrierenden Schnittstelle kann allerdings auch mit Hilfe eines Verfahrens erfolgen, das sich an das erfindungsgemäße Verfahren selbst anlehnt. Auch dieser Aspekt der Erfindung soll weiter unten beschrieben werden.

In FIG. 1 ist exemplarisch die Schnittstelle 4, 4' eines Funktionsbausteins FB 5 dargestellt, die verschiedene, durch entsprechende Strukturen repräsentierte Datenbereiche umfaßt.

Grundsätzlich handelt es sich bei Strukturen um zusammengesetzte benutzerdefinierbare Datentypen, die zusammen mit den für sie ggf. definierten Zugriffsfunktionen als abstrakte Datentypen bezeichnet werden, wobei die Zusammenfassung von Datentypen und Zugriffsfunktionen als Klasse oder Objekt bezeichnet wird. Die Beschreibung wird hier für den Fall des Vorliegens benutzerdefinierbarer Strukturen bzw. vordefinierter Strukturen fortgesetzt; zum Umfang der Erfindung gehört jedoch selbstverständlich auch, die Verwendung abstrakter Datentypen, Klassen oder Objekte. Als gemeinsamer Oberbegriff für die aufgeführten Strukturen werden vielfach heute auch die Begriffe Behälter oder Container verwendet.

Die Schnittstelle 4, 4' des Funktionsbausteins FB 5 umfaßt zunächst einen Container, mit dem Daten an den Funktionsbaustein FB übergeben werden können; dies ist der Container, der in FIG. 1 die textuelle Bezeichnung "IN" trägt. Ganz analog ist ein Container vorgesehen, mit dem der Funktionsbaustein FB Daten an andere Softwarekomponenten des Automatisierungssystems ausgeben kann; dieser Container trägt in FIG. 1 die Bezeichnung "OUT". Weiterhin ist ein Container vorgesehen, mit dem eine bidirektionale Datenübergabe - es können also sowohl Daten an den Funktionsbaustein FB übergeben werden als auch von diesem ausgegeben werden - realiziert ist; dieser Container trägt die Bezeichnung "INOUT". Ferner ist noch ein Container für temporäre Daten - "TEMP" -, konstante Daten-"CONST" - bzw. statische Daten - "STAT" - vorgesehen.

Die beschriebenen Container bilden zusammen die Softwareschnittstelle 4 des Funktionsbausteins FB. Gleichzeitig stellen diese Container gewissermaßen die oberste Hierarchiestufe der Softwareschnittstelle 4 dar und bewirken die Einteilung der Schnittstellenparameter in Kategorien (Datenein-, -ausgabe, temporäre Daten, etc.).

Wenn die Container ausschließlich eine logische Gruppierung der Schnittstellenparameter bewirken, wobei die einzelnen Schnittstellenparameter quasi parallel in der gleichen Hierarchiebene angeordnet sind, führt dies dazu, daß die Angabe eines solchen logischen Containers (z.B. "TEMP") zur Identifizierung einer beliebig tief angesiedelten Variable nicht erforderlich aber auch nicht schädlich ist. In einem solchen Falle kommt es jedoch im Falle identisch benannter Schnittstellenparameter, die logisch verschiedenen Containern zugeordnet sind, zu Namenskonflikten, die beachtet werden müssen.

Je nach Komplexität der über die Schnittstelle 4 zu übergebenden Daten können die Container bzw. die diesem zugrundeliegenden Strukturen vom Benutzer entsprechend seiner Anforderungen spezifiziert, modifiziert oder ergänzt werden.

Für die an den Funktionsbaustein FB zu übergebenden Daten ist dies für die dem Container "IN" unterlagerte Hierarchiestufe dargestellt.

Die Struktur "IN" umfaßt in der exemplarischen Darstellung gemäß FIG. 1 die Variablen x, y und z. Die Variable x ist eine Variable des Typs Boolean und damit eine Variable eines einfachen Typs, dessen Wert, Gültigkeitsbereich oder Ähnliches genauso wie bei anderen einfachen Typen, wie z.B. integer, real, float, double, char, etc. direkt darstellbar ist.

Die Variable y ist eine Variable eines benutzerdefinierten Datentyps und umfaßt im exemplarisch dargestellten Fall gemäß FIG. 1 die drei Variablen k1, k2 und k3 des einfachen Datentyps Integer und stellt somit selbst wieder eine Struktur dar.

Die Struktur der Variablen y ist bereits im ersten Teilfenster 2 in der dort lediglich exemplarisch gewählten Darstellung feiner aufgelöst.

Sowohl bei der baumartigen Darstellung 4 der Hierarchie im ersten Teilfenster 2 als auch bei der später noch zu beschreibenden Detailansicht 4' im zweiten Teilfenster 3 kommen grafische Symbole zur Kennzeichnung der jeweiligen Einträge zum Einsatz. So wird im ersten Teilfenster 2 die baumartige Struktur 4 der einzelnen Hierarchieebenen grundsätzlich durch entsprechende horizontale und vertikale Linien dargestellt, wobei die Verzweigungen in der baumartigen Struktur durch entsprechende Symbole 8, 8', 8" kenntlich gemacht sind.

Die Symbole 8 können sich in einer praktischen Realisierung noch insofern voneinander unterscheiden, als sie anders dargestellt sind, sofern die mit ihnen gekennzeichnete Verzweigung geöffnet ist, indem z.B. ein geöffneter Ordner dargestellt ist, und indem ein geschlossener Ordner dargestellt ist, solange die Verzweigung ausgeblendet ist.

Der Benutzer kann also unmittelbar anhand der dargestellten Symbolik 8 erkennen, ob eine selektierbare Position ggf. graphisch erweiterbar ist, d.h. einen ggf. darstellbaren Unterbaum besitzt, oder nicht.

Mit einem Cursor sind sowohl die graphischen Symbole 8, 8', 8" als auch die in der Bildschirmdarstellung benachbart zu diesen angeordneten Bezeichnungen selektierbar.

Um die Komplexität der Darstellung im ersten Teilfenster 2 nicht unnötig zu erhöhen, ist vorgesehen, daß die Anzahl der dargestellten Hierarchiestufen vom Benutzer wahlbar ist, d.h. der Benutzer kann auswählen, welche Teilbäume oder Äste er anzeigen möchte und welche nicht. Dabei ist die Anzahl der dargestellten Hierarchiestufen insbesondere für jeden Ast einzeln einstellbar. Dazu ist in der hierarchieartigen Darstellung für jeden Ast, also für eine dargestellte Struktur, ein selektierbares Bildschirmobjekt vorgesehen, das z.B. mit dem Cursor selektierbar ist, wobei ein darauf folgender Tastendruck die hierarchisch unter diesem Objekt liegenden Objekte, also weitere Strukturen oder Variablen anzeigt, sofern sie zuvor nicht dargestellt waren bzw. die Darstellung unterdrückt, sofern sie zuvor angezeigt waren.

Ein ähnliches Verhalten weist z.B. der sogenannte Explorer von Windows® 95 oder Windows NT® (eingetragene Marken der Microsoft Corporation) auf.

Wird das graphische Symbol 8, 8', 8" oder die Bezeichnung eines Containers selektiert, so führt dies dazu, daß der Container bzw. die diesem zugrundeliegende Struktur erweitert wird und auch die Komponenten der Struktur zu Anzeige gelangen. Dies geschieht sowohl in der vornehmlich graphischen Darstellung 4 im ersten Teilfenster 2 als auch zusätzlich in einer im wesentlichen textuellen Darstellung 4' im Teilfenster 3.

Das Teilfenster 3 ist dabei der Darstellung der jeweiligen Inhalte der im Teilfenster 2 selektierten Komponente vorbehalten. Ist, wie in FIG. 1 exemplarisch gezeigt, im ersten Teilfenster 2 der Container "IN" 6 selektiert, so wird im zweiten Teilfenster 3 der Inhalt des selektierten Containers 6, also die Variable x, die weitere Struktur y und das Feld z, angezeigt. Wird in einem nächsten Schritt - so wie z.B. in FIG. 2 gezeigt - im ersten Teilfenster 2 die Struktur "y" 6 selektiert, so gelangt im zweiten Teilfenster 3 der Inhalt der nunmehr selektierten Struktur 6, die Variablen k1, k2 und k3 zur Anzeige.

Nur wenn im ersten Teilfenster 2 eine nicht mehr erweiterbare Komponente, also eine Variable, die daher gleichsam ein Blatt der baumartigen Struktur, einen sog. Terminal, bildet, ausgewählt wird, wird im zweiten Teilfenster die Struktur, zu der die ursprünglich selektierte Variable gehört, angezeigt, wobei die Selektionsmarkierung im Teilfenster 3 automatisch auf das angewählte Terminal wechselt.

Die beschriebene Selektion ist im ersten Teilfenster 2 besonders übersichtlich durchzuführen, da die hierarchischen Abhängigkeiten stets in Form einer baumartigen Struktur 4 dargestellt werden, so daß insbesondere auch ein Wechsel von einem Ast zu einem weiteren Ast möglich ist, ohne dazu zunächst die hierarchisch darunter liegende gemeinsame Verbindung passieren zu müssen.

Im zweiten Teilfenster 3 ist im Gegensatz dazu eine in Richtung niedrigerer Hierarchiestufen fortschreitende Selektion möglich (ferner ist vorgesehen, daß durch Betätigen einer vorgebbaren Taste, hier der sog. Backspace-Taste, auch die Möglichkeit in den übergeordneten Container zu wechseln, sofern ein solcher existiert). So ist z.B. in FIG. 1 im zweiten Teilfenster 3 der Container "IN" 6 dargestellt. Anhand der Symbolik 8, 8', 8" oder anhand der gleichfalls ausgewiesenen Datentypen ist unmittelbar ersichtlich, daß die Variable x eine Variable eines einfachen Typs und daher nicht mehr erweiterbar ist. Die Variablen y und z sind dagegen erweiterbar. Durch eine Selektion der entsprechenden Einträge wird die Erweiterung aktiviert und z.B. bei einer Selektion der Struktur y deren Komponenten im zweiten Teilfenster 3 angezeigt, wobei die vorherige Anzeige ersetzt wird. - Es ist allerdings auch denkbar, daß im Falle einer Selektion im zweiten Teilfenster 3 der Bildschirminhalt nicht ersetzt, sondern nur überdeckt wird; beispielsweise mittels eines zusätzlich geöffneten Bildschirmfensters.

Mit dem Positionieren des Cursors 7' auf die Zeile, in der im zweiten Teilfenster 3 die Darstellung der Variablen y erfolgt, und eine ggf. darauf folgende Aktivierung, z.B. mit der Maustaste oder mittels eines Tastendrucks kann also die Struktur y detailliert dargestellt werden, wobei eine solche Selektion auch unmittelbar eine korrespondierende Positionierung des Cursors 7 auf die Struktur y unterhalb des Containers "IN" im ersten Teilfenster 2 nach sich zieht.

In FIG. 2 sind die Verhältnisse dargestellt, die sich sowohl im ersten als auch im zweiten Teilfenster 2, 3 bei einer Selektion der Struktur y, die wiederum hierarchisch zu dem Container "IN" gehört, ergeben.

In der Detaildarstellung 4', im zweiten Teilfenster 3, werden als Komponenten der Struktur y die Variablen k1, k2 und k3 angezeigt, wobei die Attribute der angezeigten Schnittstellenparameter gleichzeitig dargestellt werden. Ferner sind die Attribute eines Schnittstellenparameters ggf. auch editierbar, wobei zur Auswahl eines Schnittstellenparameters der bewegliche Cursor 7' vorgesehen ist, dessen Positionierung wiederum durch ein Eingabegerät beeinflußbar ist.

In FIG. 2 unterscheidet sich der Inhalt des zweiten Teilfensters 3 von demjenigen der FIG. 1 dadurch, daß nunmehr der Inhalt der Variablen y aufgelöst ist, was auch anhand des Eintrags 6 in der Titelzeile des zweiten Teilfensters 3 ersichtlich ist. In der detaillierteren Darstellung 4' gemäß FIG. 2 sind die Attribute der Variablen k1, k2 und k3, die zusammen die Struktur y bilden, besonders übersichtlich tabellenartig dargestellt, wobei für jede Variable einzeln, also z.B. nur für k2, ein Anfangswert oder ein Kommentar vorgebbar ist. Bei der Darstellung gemäß FIG. 1 würde sich ein entsprechender Anfangswert oder ein Kommentar auf die Struktur y insgesamt beziehen.

Das zweite Teilfenster 3 weist neben der Titelzeile, welche die textuelle Bezeichnung 6 der mit dem Cursor 7 selektierten Komponente 6 der Softwareschnittstelle 4 aus dem ersten Teilfenster 2 angibt, noch eine Reihe vertikaler Spalten 9, 10, 11, 12, 13, etc., deren Anzahl sich nach der Anzahl möglicher Attribute richtet, so daß sich ggf. ein Vielzahl von Spalten ergibt, die insbesondere nicht mehr zusammen am Bildschirm bzw. im zweiten Teilfenster 3 darstellbar sind, auf, in denen die Attribute der jeweiligen Variablen dargestellt sind. Dabei werden in einer Namensspalte 9 die Namen, also die Klartextbezeichnungen, der jeweils dargestellten Strukturen oder Variablen aufgeführt.

In FIG. 1 sind dies die Variablen x, y und z als Komponenten der Struktur "IN" bzw. als Inhalt des Containers "IN"; in FIG. 2 sind dies die Variablen k1, k2, k3 als Komponenten der Struktur y, die wiederum hierarchisch zum Container "IN" gehört. In den sich in der Darstellung gemäß FIG. 1 bzw. FIG. 2 rechts neben der Namensspalte 9 anschließenden Spalten 10, 11, 12, 13 sind weitere, die jeweilige Variable oder Struktur charakterisierende Angaben, wie z.B. der Datentyp und die Adresse relativ zum Anfang der jeweils gerade im zweiten Teilfenster 3 dargestellten Struktur, dargestellt. Die Anzeige kann aber z.B. auch Angaben zu Gültigkeitsbereichen umfassen.

Die Reihenfolge der Spalten 10, 11, 12, 13, etc. ist veränderlich. Dazu ist ein am Bildschirm einblendbarer Dialog zur Auswahl anzuzeigender bzw. auszublendender Spalten vorgesehen, mit dem ggf. auch die Reihenfolge, in der die Spalten 10, 11, 12, 13, etc. zu Anzeige kommen, festlegbar ist.

Alternativ ist vorgesehen, daß der Titelbereich - derjenige Bereich, in dem die Klartextbezeichnung der jeweiligen Spalte angegeben ist, also z.B. der Bereich mit der Klartextbezeichnung "Datentyp" für die Spalte 10 - der jeweiligen Spalte 10, 11, 12, 13 selektierbar ist, wobei die Position der jeweiligen Spalte 10, 11, 12, 13 dann mittels der sogenannten Drag&Drop-Technik oder mit einem dafür vorgesehenen sog. Kontextmenue, das z.B. durch Betätigen einer Maustaste aktivierbar ist, veränderlich ist.

Auf diese Weise können Spalten mit besonders hoher Relevanz so positioniert werden, daß sie permanent am Bildschirm dargestellt werden. Dies ist insbesondere dann von Bedeutung, wenn die Dimension des zweiten Teilfensters 3 für die Anzeige sämtlicher Spalten 10, 11, 12, 13, etc. nicht ausreicht, so daß der Bildschirminhalt des zweiten Teilfensters 3 ggf. horizontal gescrollt werden muß.

Spalten mit geringerer Relevanz können damit also in einen ggf. nicht sichtbaren Teil des Fensters verlagert werden, wobei ihr Inhalt nur vergleichsweise selten von Bedeutung ist, so daß sich der Benutzer nur selten der Mühe unterziehen muß, den Bildschirminhalt zu scrollen.

Damit beim evtl. erforderlichen Scrollen des Bildschirminhalts für den Benutzer die Zuordnung der dargestellten Informationen nicht erschwert wird, ist vorgesehen, daß die Namensspalte 9 ortsfest ist. Daß heißt, auch beim horizontalen Scrollen bleibt die Position der Namensspalte 9 immer erhalten, so daß der Benutzer die in einer Zeile dargestellten Daten stets der jeweiligen Variable oder Struktur, die anhand der in der Namensspalte 9 aufgeführten Bezeichnung erkennbar ist, zuordnen kann, da diese Klartextbezeichnung sich stets am Anfang der Zeile in der dort ortsfesten Namensspalte 9 findet.

Dadurch, daß also entweder durch Bewegung des Cursors 7 im ersten Teilfenster 2 eine Selektion durchgeführt wird, oder indem diese Selektion durch analoge Aktionen oder Eingaben im zweiten Teilfenster 3 mit dem Cursor 7' durchgeführt wird, kann die Struktur der Softwareschnittstelle 4, ihr Layout und ihr Inhalt bzw. ein evtl. definierter Gültigkeitsbereich dargestellt und bestimmte Daten gegebenenfalls auch editiert werden.

Bisher wurde vorausgesetzt, daß mit dem erfindungsgemäßen Verfahren nur die Softwareschnittstelle eines bereits zuvor selektierten Bausteins untersucht wird, wobei die vorherige Selektion des Bausteins z.B. dadurch erfolgt ist, daß ggf. mit einem anderen Software-Werkzeug dessen Programmierung erfolgt.

Zum Gegenstand der Erfindung gehört jedoch auch, aus der Menge der für eine Software-Applikation definierten Bausteine mit einem dem erfindungsgemäßen Verfahren analogen Verfahren den Baustein, dessen Schnittstelle untersucht wird, direkt und damit deutlich flexibler auswählen zu können.

Ganz analog zu den hierarchischen Strukturen sind nämlich auch Abhängigkeiten bzw. hierarchische Struktur der Bausteine einer Software-Applikation baumartig darstellbar, wobei die Wurzel des Baumes die Applikation, also das ablauffähige Gesamtprogramm darstellt, und die Bausteine die Äste des Baumes bilden. Gegebenenfalls sind zusammengehörige Bausteine bzw. die Funktionsbausteine einerseits und die Operationsbausteine anderseits jeweils in einem gemeinsamen Ast zusammenfaßbar, von dem sie dann wieder Verzweigungen, also eigene Äste bilden.

Das Ende der jeweiligen Äste bilden dann die zu dem mit dem Ast dargestellten Baustein gehörigen Schnittstellen, die selbst einer erweiterbare Struktur darstellen. Die Möglichkeit der Selektion beliebiger Schnittstellen aus der Software-Applikation bedeutet also letztlich im wesentlichen das Einfügen mindestens einer zusätzliche Hierarchiestufe.

Da die Bausteine der Software-Applikation eineindeutige Bezeichnungen haben, sind auch Variable tief verschachtelter Strukturen einer Softwareschnittstelle eines bestimmten Bausteins diesem jederzeit zuordenbar, wenn die Bezeichnung diese Bausteins zur Identifizierung der Variable mitgeführt wird.

Während die vollständige Bezeichnung der Variablen k2 als Komponente der Struktur y, die wiederum hierarchisch zu dem Container "IN" gehört, als \IN\y\k2 darstellbar ist, so ist diese für die gesamte Software-Applikation eineindeutig darstellbar, wenn zusätzlich noch der Name des betreffenden Bausteins, z.B. des Funktionsbausteins FB10, mitgeführt wird, so daß die Variable y dann als \FB10\IN\y\k2 darstellbar ist.

## Patentansprüche

1. Verfahren zum bildschirmgestützten Definieren und Parametrieren einer Softwareschnittstelle einer Softwarekomponente **(5)** eines industriellen Automatisierungssystems,
- wobei die Softwareschnittstelle mindestens einen Schnittstellenparameter **(6)** aufweist und
- wobei der Schnittstellenparameter **(6)** durch zumindest ein editierbares Attribut näher charakterisiert ist
**dadurch gekennzeichnet,**
- **daß** ein vertikal bzw. horizontal geteiltes Anzeigefenster **(1)** vorgesehen ist,
- in dessen erstem Teilfenster **(2)** die hierarchische Struktur **(4)**der mittels eines beweglichen Cursors **(7)** selektierbaren Schnittstellenparameter **(6)** der jeweiligen Softwarekomponente **(5)** und
- in dessen zweitem Teilfenster **(3)** eine Detaildarstellung **(4')** des selektierten Schnittstellenparameters **(6)** erfolgt,
- wobei die Detaildarstellung **(4')** eine Darstellung des mindestens einen Attributs des selektierten Schnittstellenparameters **(6)** umfaßt und das Definieren und Parametrieren des Attributs ermöglicht.

2. Verfahren nach Anspruch 1, **dadurch gekennzeichnet, daß** die Attribute einen Namensteil (9) und einen Datenteil (10,11,12,13) aufweisen, wobei der Namensteil (9) zur Identifizierung des Attributes dient, und daß der Datenteil (10,11,12,13), sofern seine bildliche Darstellung mehr Platz erfordert als das Anzeigefenster (1) bzw. das Anzeigegerät, bietet, horizontal scrollbar ist, wobei die bildliche Darstellung des Namensteils (9) ortsfest ist.

3. Verfahren nach Anspruch 2, **dadurch gekennzeichnet, daß** der Namensteil (9) und der Datenteil (10,11,12,13) in nebeneinander bzw. untereinander angeordneten vertikalen Spalten bzw. horizontalen Zeilen angeordnet ist, wobei der Datenteil (10,11,12,13) gegebenenfalls in eigene Spalten bzw. Zeilen unterteilt ist.

4. Verfahren auch Anspruch 3, **dadurch gekennzeichnet, daß** die Abfolge der Spalten bzw. Zeilen vom Benutzer frei wählbar und insbesondere abspeicherbar ist.

## Claims

1. Method for visual display unit-based definition and parameterisation of a software interface of a software component (5) of an industrial automation system, the software interface having at least one interface parameter (6), and the interface parameter (6) being further **characterised by** at least one editable attribute, **characterised in that** provision is made for a display window (1) which can be divided vertically or horizontally, in the first partial window (2) of which the hierarchical structure (4) of the interface parameters (6) of the respective software component (5) can be selected using a movable cursor, and in the second partial window (3) of which a detail display (4') of the selected interface parameter (6) is provided, the detail display (4') comprising a representation of at least one attribute of the selected interface parameter (6) and enabling the attribute to be defined and parameterised.

2. Method according to Claim 1, **characterised in that** the attributes have a name portion (9) and a data portion (10, 11, 12, 13), the name portion (9) being used for identifying the attribute, and the data portion (10, 11, 12, 13) being scrollable horizontally if its graphical representation requires more space than that offered by the display window (1) or the display unit, the graphical representation of the name portion (9) being stationary.

3. Method according to Claim 2, **characterised in that** the name portion (9) and the data portion (10, 11, 12, 13) are arranged in vertical columns arranged side by side or in horizontal rows arranged one below the other, the data portion (10, 11, 12, 13) possibly being divided into columns or rows of its own.

4. Method according to Claim 3, **characterised in that** the sequence of the columns or rows can be freely selected and, in particular, stored by the user.

## Revendications

1. Procédé pour la définition et le paramétrage, assistés par écran, d'une interface logicielle d'un élément logiciel (5) d'un système automatisé industriel,
- dans lequel l'interface logicielle comporte au moins un paramètre d'interface (6) et
- dans lequel le paramètre d'interface (6) est **caractérisé** plus en
détail par au moins un attribut pouvant être édité,
**caractérisé par le fait que**
- on prévoit une fenêtre d'affichage (1) divisée verticalement ou horizontalement
- dans la première sous-fenêtre (2) de laquelle on a la structure hiérarchique (4) des paramètres d'interface (6), sélectionnables au moyen d'un curseur mobile (7), de l'élément logiciel (5) respectif et
- dans la deuxième sous-fenêtre (3) de laquelle, on a une représentation détaillée (4') du paramètre d'interface (6) sélectionné,
- la représentation détaillée (4') comprenant une représentation du ou des attributs du paramètre d'interface (6) sélectionné et permettant la définition et le paramétrage du ou des attributs.

2. Procédé selon la revendication 1, **caractérisé par le fait que** les attributs comportent une partie formant nom (9) et une partie formant données (10, 11, 12, 13), la partie formant nom (9) servant à l'identification de l'attribut, et que la partie formant données (10, 11, 12, 13), si sa représentation sur l'écran demande plus de place que n'en offre la fenêtre d'affichage (1) ou l'appareil d'affichage, peut défiler horizontalement, la représentation sur l'écran de la partie formant nom (9) étant à un endroit fixe.

3. Procédé selon la revendication 2, **caractérisé par le fait que** la partie formant nom (9) et la partie formant données (10, 11, 12, 13) sont placées dans des colonnes verticales les unes à côtés des autres ou dans des lignes horizontales les unes en dessous des autres, la partie formant données (10, 11, 12, 13) étant divisée le cas échéant en colonnes ou lignes particulières.

4. Procédé selon la revendication 3, **caractérisé par le fait que** la succession des colonnes ou lignes peut être choisie librement par l'utilisateur et notamment être mémorisée.
